# EUROPEAN PATENT SPECIFICATION

(11) **EP 3 098 203 B1**
(45) Date of publication and mention of the grant of the patent: **06.12.2017**
(21) Application number: 16169798.2
(22) Date of filing: 16.05.2016
(51) Int. Cl.: C02F 1/28, C02F 101/16

(54) **PROCESS FOR AMMONIA REMOVAL FROM WASTEWATER**
VERFAHREN ZUR AMMONIAKENTFERNUNG AUS ABWASSER
PROCÉDÉ D'ÉLIMINATION D'AMMONIAC À PARTIR D'EAUX USÉES

(30) Priority: 26.05.2015 IT UB20151271
(43) Date of publication of application: 30.11.2016
(73) Proprietor: Dal Maschio, Roberto, 38122 Trento (IT)
(72) Inventor: DAL MASCHIO, Roberto, 38122 Trento (IT); CONTRINI, Claudia, 38122 Trento (IT)
(74) Representative: Freyria Fava, Cristina

(56) References cited:
- WO-A1-2012/002798
- WO-A2-2004/049787
- WO-A2-2014/144214
- CN-A- 103 803 711
- JP-A- H 078 945
- US-B1- 6 203 709
- US-B1- 6 989 102
- DATABASE INSPEC [Online] THE INSTITUTION OF ELECTRICAL ENGINEERS, STEVENAGE, GB; 2 July 2007 (2007-07-02), QI SU-FANG ET AL: "Removing ammonia nitrogen from wastewater by immobilization nitrobacteria with chitosan and alginate", XP002746767, Database accession no. 9773108 & JOURNAL OF GUANGDONG UNIVERSITY OF TECHNOLOGY EDITORIAL OFFICE OF GDUT JOURNAL CHINA, vol. 24, no. 2, 2 July 2007 (2007-07-02), pages 15-19,

## Description

### FIELD OF THE INVENTION

The present invention concerns a new process for ammonia removal from civil, industrial and agricultural wastewater.

### BACKGROUND OF THE INVENTION

Sodium alginate, a naturally occurring non-toxic polysaccharide found in brown algae, has been used in drug delivery applications. It is a linear copolymer with a polysaccharide backbone comprising two repeating carboxylated monosaccharide units [mannuronic acid and guluronic acid (G)]. Alginate can be cross-linked by external gelation methods allowing the alginate-drug solution to be extruded as microsphere droplets into a CaCl₂ solution.

Gelling of alginate occurs when the divalent cations participate in the interchain bonding between guluronic acid-blocks, giving rise to a three-dimensional network in the form of a gel. An "eggbox" model has been proposed to explain the nature of this interaction; the diaxially linked guluronic acid residues form cavities that function as binding sites for cations, the divalent calcium ions fit into guluronic acid structures like eggs in an egg box. This phenomenon has been used to prepare alginate beads for drug delivery system.

The use of alginate microbeads in food, biotechnology and the pharmaceutical industry is currently widespread due to their unique properties, such as high biocompatibility and biodegradability.

Ammonia is a common and undesirable contaminant in wastewater and biomass cultivation medium; its accumulation in water results in eutrophication and depletion of oxygen due to nitrification, harming the water-borne organisms like fishes. In particular, for environmental purposes, this green technology is able to easily remove ammonia from high strength wastewaters, in order to reduce environmental problems and also resolve the big problem of ammonia volatilization from livestock, causing high levels of atmospheric ammonia, detrimental to both farm workers and birds; for the reasons mentioned above there are restrictive laws on the concentration of ammonia spread into environment.

Various physical, chemical and biological processes have been used to remove ammonia from gaseous effluents including: adsorption, absorption, incineration and biofiltration (Chung *et al.,* 1997). Adsorption is a process whereby gaseous components are removed from an effluent gas stream by adhering to the surface of a solid medium. The most common media used in industry are activated carbon, silica gel, activated alumina and zeolites. In gas absorption, the effluent gas stream is allowed to come into contact with a liquid and pollutants are removed from the gas stream by dissolving in the liquid. A wet scrubber is the generic name of an air pollution control device that uses the process of absorption to separate the pollutant from a process gas stream.

Air and steam stripping are typical industrial equipments for separating ammonia from an aqueous stream by differences in boiling point or vapor pressure with a contemporary action of pH and temperature changes. Vapour incineration is a process involving controlled burning at high temperatures in which oxygen in the air oxidizes waste molecules. In biofiltration, moist biofilms are attached to a porous media in a packed bed bioreactor. Media typically used in biofilters include compost, soil or peat that has been mixed with a bulking agent.

WO-A-2012/002798, CN-A-103 803 711 and the paper by Qi Su-Fang et al. published on Journal of Guandong University, vol. 24(2):15-19 disclose processes for ammonia removal from water by means of solid elements comprising microorganisms immobilized thereon, wherein such microorganisms constitute the active agent for ammonia removal. Such processes for ammonia removal from water are economically disadvantageous to implement because of the difficulties of maintaining the microorganisms alive for allowing their activity of ammonia removal.

Document JPH078945A discloses a method for removing phosphate ion and ammonia in natural water using a material which adsorbs phosphorus and a zeolite immobilized in a polymer gel such as sodium alginate-calcium salt.

In document WO 2014/144214 A2 it is disclosed the use of a iron functionalized solid alginate to remove phosphate and other P, Se or As compounds from municipal and industrial wastewaters.

### OBJECT AND SUMMARY OF THE INVENTION

The present description concerns a new, environmental friendly process of ammonia removal from wastewaters of industrial, civil and/or agricultural origin.

The object of the present invention is to provide reagents useful in ammonia removal from wastewaters which are not detrimental to environment and valuable by an economic point of view.

According to the invention, the above object is achieved thanks to the method specified in the ensuing claims, which are understood as forming an integral part of the present description.

In an embodiment, the instant disclosure discloses a process for ammonia removal from wastewater comprising the following steps:
a) providing solid elements, wherein the solid elements consist of sodium alginate and at least one divalent metal cation salt, the divalent metal cation being selected from Ca²⁺, Cu²⁺, Mg²⁺, Zn²⁺ and Fe²⁺;
b) immerging the solid elements in the wastewater containing an initial amount of ammonia;
c) leaving in inner contact the solid elements with the wastewater, whereby the solid elements adsorb ammonia contained in the wastewater;
d) removing the solid elements from the wastewater, obtaining a wastewater containing ammonia in a lower amount than the initial one and solid elements enriched in ammonia.

The solid elements made of sodium alginate and at least one divalent metal cation salt are able to adsorb and therefore remove NH₃ molecules when put in inner contact with civil, industrial and agriculture wastewater.

### BRIEF DESCRIPTION OF THE DRAWINGS

The invention will now be described in detail, purely by way of illustrative and non-limiting example, with reference to the attached figures, wherein:

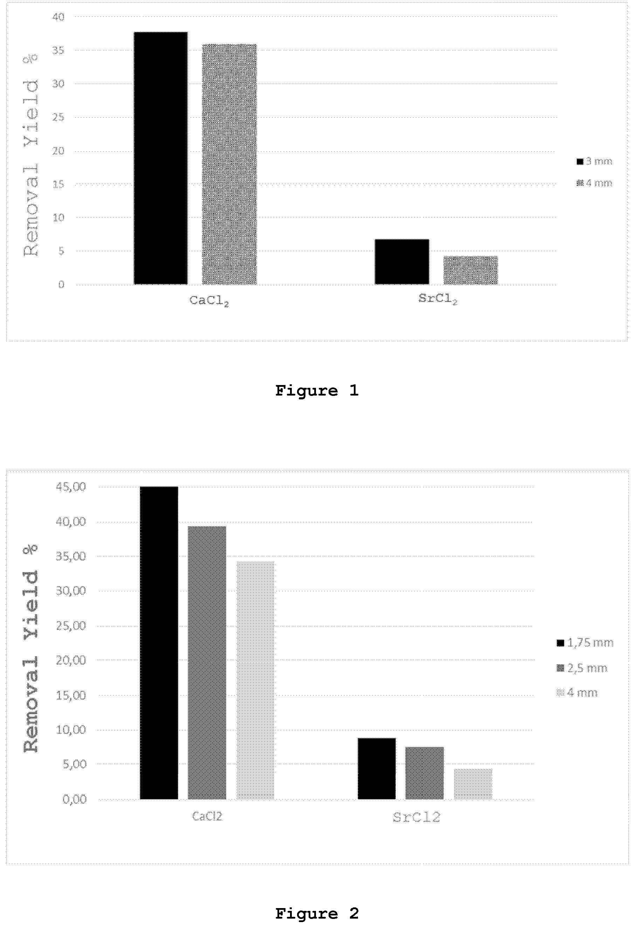

- **Figure 1****:** Yields of ammonia removal from an ammonia solution having ammonia concentration of 4500 mg/L obtained employing the solid elements according to the instant description and solid elements disclosed in the prior art, wherein the solid elements present an average diameter of 3 and 4 mm.
- **Figure 2****:** Yields of ammonia removal from an ammonia solution having ammonia concentration of 4500 mg/L obtained employing the solid elements according to the instant description and solid elements disclosed in the prior art, wherein the solid elements present an average diameter of 1.75, 2.5 and 4 mm.

### DETAILED DESCRIPTION OF THE INVENTION

The invention will now be described in detail, by way of non limiting example, with reference to a process for removing ammonia from wastewaters making use of solid elements consisting of sodium alginate and calcium or copper chloride.

It is clear that the scope of this description is in no way limited to the use of solid elements consisting of sodium alginate and calcium or copper chloride, since other divalent metal cation salts are usable according to the instant description.

In the following description, numerous specific details are given to provide a thorough understanding of embodiments. The embodiments can be practiced without one or more of the specific details, or with other methods, components, materials, etc. In other instances, well-known structures, materials, or operations are not shown or described in detail to avoid obscuring aspects of the embodiments.

Reference throughout this specification to "one embodiment" or "an embodiment" means that a particular feature, structure, or characteristic described in connection with the embodiment is included in at least one embodiment. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

The headings provided herein are for convenience only and do not interpret the scope or meaning of the embodiments.

The present description concerns a process for ammonia removal from wastewater comprising the following steps:
a) providing solid elements, wherein the solid particles consist of sodium alginate and at least one divalent metal cation salt, the divalent metal cation being selected from Ca²⁺, Cu²⁺, Mg²⁺, Zn²⁺ and Fe²⁺;
b) immerging the solid elements in the wastewater containing an initial amount of ammonia;
c) leaving in inner contact the solid elements with the wastewater, whereby the solid elements adsorb ammonia contained in the wastewater;
d) removing the solid elements from the wastewater, obtaining a wastewater containing ammonia in a lower amount than the initial one and solid elements enriched in ammonia.

The solid elements made of sodium alginate and at least one divalent metal cation salt are, in fact, able to adsorb and therefore remove NH₃ molecules when put in inner contact with civil, industrial and agriculture wastewater.

In an embodiment, step c) provides for leaving in inner contact the solid elements with the wastewater for a time sufficient for the solid elements being able to adsorb the ammonia contained in the wastewater; preferably the solid elements are left in inner contact with the wastewater for at least 1 minute, preferably for at least 30 minutes, more preferably for at least 1 hour, still more preferably for at least 2 hours.

In an embodiment, the at least one divalent metal cation salt is selected from divalent metal cation chloride and nitrate. Preferably the salt is chloride.

In a further embodiment the divalent metal cation is selected from Ca²⁺, Cu²⁺. Preferably the divalent metal cation is Ca²⁺.

According to a still further embodiment, the solid elements are immersed within the wastewater in a weight ratio comprised between 0.25 to 1.50, preferably 0.5 to 1.

In one embodiment of the present description, the solid elements are produced by adding, preferably dropwise, a sodium alginate aqueous solution to an aqueous solution of the at least one divalent metal cation salt.

The solid elements may have a particle shape with an average diameter of the elements comprised between 0.1 to 7 mm, preferably 3 to 5 mm, preferably the solid elements present a roughly spherical shape.

The results witnessed in the present description show that the solid elements made of sodium alginate and at least one divalent metal cation salt adsorbs ammonia in an amount of at least 10%, preferably at least 20%, more preferably at least 30%, by weight with respect to the initial amount of ammonia contained in the wastewater.

To observe if the same solid elements could be reused after discharge in water the present inventors have conducted experiments a second and third time. The analyses confirmed that until at least the third reuse the solid particles removed ammonia with the same yield, i.e. about 30% by weight each time with respect to the ammonia contained in the wastewater.

Without willing to be bound to any specific theory, the present inventors have reasons to believe that the mechanism of adsorption of ammonia by the solid particles is based on the dative bond that forms between the divalent metal cation contained in the solid elements and ammonia. The dative bond could form an intermediate transition state and be able "to win" the polar bonds that hold the molecules of ammonia into the water phase of the wastewater.

### Materials and methods

### Solid elements consisting of sodium alginate and CaCl₂ or CuCl₂

Sodium alginate, CaCl₂ and CuCl₂ were purchased from Sigma-Aldrich Chemical Co. Ltd. (St. Louis, USA).

An alginate solution was prepared dissolving sodium alginate into 100 mL of water in varying concentrations (0.5 to 2 % w/v) with mild stirring (100 rpm/min) for 30 min. The alginate solution (100 mL) was added dropwise into CaCl₂ or CuCl₂ solutions (0.05 to 0.2 M) in order to obtain solid elements having a general spherical shape with different diameters (3 to 5 mm), successively washed and maintained in water.

In order to obtain particles with different diameters, i.e. 1.75, 2.5, 3, 4 and 5 mm, syringes provided with correspondingly sized needles were filled with the sodium alginate solution and applying a constant pressure the drops have been added into CaCl₂ or CuCl₂ solutions.

### Solid elements consisting of sodium alginate, and SrCl₂

Two alginate solutions were prepared dissolving sodium alginate into 400 mL of water in order to obtain a concentration of 14 g L⁻¹ with mild stirring (100 rpm/min) for 30 min. Each alginate solutions (400 mL) was added dropwise into SrCl₂ solution (250 mM) in order to obtain solid elements having a general spherical shape with different diameters, successively washed and mantained in water.

In order to obtain particles with different diameters, i.e. 1.75, 2.5, 3 and 4 mm, syringes provided with correspondingly sized needles were filled with the sodium alginate and applying a constant pressure the drops have been added into SrCl₂ solution.

### Methods for evaluation of ammonia concentration in wastewater

Standard methods were used to evaluate the ammonia concentration in wastewater based on a specific ion (ammonia) selective probe (APHA, 1985 APHA Standard Methods for the Examination of Water and Wastewater (16th edn) Am. Publ. Hlth Assoc, Washington, D.C (1985)). It can be also used Nessler reagent that allows searching of ammonia in an aqueous solution.

It is a very sensitive reagent which allows to detect the presence of ammonia even at very low concentrations of the order of 0.1 mgL⁻¹ (= 0.1 ppm).

The Nessler reagent is constituted by potassium tetraiodomercurate K₂HgI₄ that reacting with ammonia, forms a complex that makes turn the color of the solution from yellow to yellow-orange according to the following reaction:

2 (Hgl₂+KI) + 2NH₃ → 2 (NH₃HgI₂) + 2 KI

2 (NH₃HgI₂) → NH₂Hg₂I₃ + NH₄I

The absorbance of the colored complex is measured at a wavelength of 420 nm so the ammonia concentration can determine using a spectrophotometer having firstly made a calibration curve using different and known concentrations of NH₄OH (Methods from irsa, cnr).

An ion selective membrane (Model 51927-00 HACH, USA) for ammonia detection was also used. Such a membrane allows to read mg L⁻¹ of ammonia present in a sample with a high precision after a calibration in the working range has been realized.

### Experiments

The beads according to the instant description were put in a poultry manure, a digestate and a landfill leachate with a ratio ranging from 0.5 to 1 (w/w).

During the experiments the pH of the medium did not change. The present inventors used the different media in the same conditions as received from the production sites, except for the digestate that was previously centrifuged. The experiments were repeated three times.

### Experiment 1

Digestate (from S'Anna D'Alfaedo plant, VR, Italy) was previously centrifuged at 6000 rpm for 20 minutes in order to have a more clarified supernatant. Its initial quantity of ammonia was determined by the protocol that APHA Standard Methods indicate. Then solid particles were put into it.

### Experiment 2

Landfill leachate from Ischia Podetti dump, TN, Italy, was characterized by physical and chemical analysis from Dolomiti Energia (TN - a certificated laboratory for analysis on water). Then solid particles were put into this liquid.

### Experiment 3

Chicken poultry was also tested and treated with the solid particles that were mixed and resulted in an inner contact.

Successive separation was made using a sieve having a cut-off lower than the diameter of the solid particles.

### Comparative experiments

In order to perform the comparative tests employing the solid elements consisting of i) sodium alginate and calcium chloride and ii) sodium alginate and strontium chloride, an aqueous solution containing an ammonia concentration of about 4500 mg L⁻¹ has been prepared as follows: 8.593 g of NH₄⁺Cl⁻ were mixed in 500 ml of deionized water in order to obtain a synthetic ammonia solution. 50 g of each set of particles were put in 100 ml of synthetic ammonia solution; the experiments have been carried out in triplicate, maintaining the solid particles in inner contact with the ammonia solution for 2h.

The solid elements consisting of i) sodium alginate and calcium chloride and ii) sodium alginate and strontium chloride have been prepared as detailed above employing solutions containing calcium chloride and strontium chloride, respectively, with a concentration of the divalent metal cation salt of 250 mM.

Subsequently, the ammonia removal obtained with the solid elements consisting of i) sodium alginate and calcium chloride and ii) sodium alginate and strontium chloride has been determined by means of the spectrophotometric methods using either the Nessler and the ammonia-selective membrane.

### Results

In the experiments 1 the initial quantity of ammonia in the centrifuged digestate was 5170 mg L⁻¹ of N-NH₃.

After 2 hours the solid particles were separated by the digestate and the ammonia concentration in the exhausted digestate was 3500 mg L⁻¹. A removal of ammonia from digestate by the solid particles is observed, with a removal yield of 32,3%.

In the experiments 2 the initial quantity of ammonia in the landfill leachate was 443 mg L⁻¹ of N-NH₄ and after 2 hours solid particles were sifted from the leachate to remove them. The ammonia concentration after removal was 230 mg L⁻¹ of N-NH₄, so the removal yield was around 48,1% .

In the experiments 3 the solid particles were added to an agricultural wastewater, namely chicken poultry. The solid particles after 2 h of a closely inner contact with poultry give an ammonia removal yield of 30,2%.

In the comparative experiments, conducted in triplicate, the solid particles consisting of sodium alginate and calcium chloride performed better than the solid particles containing strontium chloride.

The yields of ammonia removal are in fact 5 orders of magnitude greater employing the solid particles according to the instant invention than the solid particles containing strontium chloride disclosed in WO-A-2012/002798.

The following Tables 1 and 2 show the ammonia removal yields (expressed as percentage) obtained using either the solid elements disclosed herein and the solid elements containing SrCl₂.

**Table 1**

| **Beads ø mm** | **Initial TAN (mg/l)** | **Removal yield % Ca** | **Deviation Standard** | **Removal yield % Sr** | **Deviatio n Standard** |
|---|---|---|---|---|---|
| 3 | 4500 | 37.71 | 0.23 | 6.76 | 0.74 |
| 4 | 4500 | 35.97 | 0.98 | 4.24 | 1.03 |

Table 1 as well as figure 1 show that particles containing calcium are able to remove ammonia in an amount 5 times greater than the particles containing strontium.

**Table 2**

| **Beads ø mm** | **Initial TAN (mg/l)** | **Removal yield % Ca** | **Deviation Standard** | **Removal yield % Sr** | **Deviation Standard** |
|---|---|---|---|---|---|
| 1.75 | 4500 | 45.20 | 0.45 | 8.81 | 1.05 |
| 2.5 | 4500 | 39.30 | 1.20 | 7.48 | 1.20 |
| 4 | 4500 | 34.23 | 1.98 | 4.31 | 0.98 |

The data provided in table 2 as well as figure 2 show that decreasing the particles diameter (thus increasing the surface of contact with the ammonia solution) the solid particles according to the instant description are able to remove a higher amount of ammonia from the ammonia solution.

## Claims

1. Process for ammonia removal from wastewater, the process comprising the following steps:
a) providing solid elements, wherein the solid elements consist of sodium alginate and at least one divalent metal cation salt, the divalent metal cation being selected from Ca²⁺, Cu²⁺, Mg²⁺, Zn²⁺ and Fe²⁺;
b) immerging the solid elements in the wastewater containing an initial amount of ammonia;
c) leaving in inner contact the solid elements with the wastewater, whereby the solid particles adsorb ammonia contained in the wastewater;
d) removing the solid elements from the wastewater, obtaining a wastewater containing ammonia in a lower amount than the initial one and solid elements enriched in ammonia.

2. Process according to claim 1, wherein the at least one divalent metal cation salt is selected from divalent metal cation chloride and nitrate, preferably chloride.

3. Process according to claim 1 or claim 2, wherein the divalent metal cation is selected from Ca²⁺, Cu²⁺, preferably the divalent metal cation is Ca²⁺.

4. Process according to any one of claims 1 to 3, wherein the solid elements are immersed within the wastewater in a weight ratio comprised between 0.25 to 1.50, preferably 0.5 to 1.

5. Process according to any one of claims 1 to 4, wherein the solid elements adsorb ammonia in an amount of at least 30% by weight with respect to the initial amount of ammonia contained in the wastewater.

6. Process according to any one of claims 1 to 5, wherein the solid elements are produced by adding, preferably dropwise, a sodium alginate aqueous solution to an aqueous solution of the at least one divalent metal cation salt.

7. Process according to any one of claims 1 to 6, wherein the process provides for a further step e) of immersing the solid elements enriched with ammonia in an aqueous solution to discard ammonia adsorbed from the solid elements, obtaining solid elements substantially free of ammonia.

8. Process according to any one of claims 1 to 6, wherein steps b) to d) are repeated at least twice, more preferably at least three times, providing the solid elements of step a) until the wastewater contains ammonia in a much lower amount than the initial one and the solid elements are enriched in ammonia each time.

9. Process according to claim 7, wherein steps b) to e) are repeated at least twice, more preferably at least three times, providing the solid elements of step a) and step e) until the wastewater contains ammonia in a much lower amount than the initial one and the solid elements are enriched in ammonia each time.

## Patentansprüche

1. Verfahren zur Ammoniakentfernung aus Abwasser, wobei das Verfahren die folgenden Schritte umfasst:
a) Bereitstellen von festen Elementen, wobei die festen Elemente aus Natriumalginat und wenigstens einem Salz von einem zweiwertigen Metallkation bestehen, wobei das zweiwertige Metallkation aus Ca²⁺, Cu²⁺, Mg²⁺, Zn²⁺ und Fe²⁺ ausgewählt ist;
b) Eintauchen der festen Elemente in das Abwasser, das eine Ausgangsmenge von Ammoniak enthält;
c) Belassen der festen Elemente in innerem Kontakt mit dem Abwasser, wodurch die festen Partikel in dem Abwasser enthaltenes Ammoniak adsorbieren;
d) Entfernen der festen Elemente aus dem Abwasser, wobei ein Abwasser, das Ammoniak in einer geringeren Menge als der Ausgangsmenge enthält, und feste Elemente, die mit Ammoniak angereichert sind, erhalten werden.

2. Verfahren gemäß Anspruch 1, wobei das wenigstens eine Salz eines zweiwertigen Metallkations ausgewählt ist aus zweiwertigem Metallkation-chlorid und -nitrat, vorzugsweise -chlorid.

3. Verfahren gemäß Anspruch 1 oder Anspruch 2, wobei das zweiwertige Metallkation aus Ca²⁺, Cu²⁺ ausgewählt ist, vorzugsweise das zweiwertige Metallkation Ca²⁺ ist.

4. Verfahren gemäß einem der Ansprüche 1 bis 3, wobei die festen Elemente in dem Abwasser in einem Gewichtsverhältnis zwischen 0,25 bis 1,50, vorzugsweise 0,5 bis 1 eingetaucht sind.

5. Verfahren gemäß einem der Ansprüche 1 bis 4, wobei die festen Elemente Ammoniak in einer Menge von wenigstens 30 Gewichtsprozent, bezogen auf die Ausgangsmenge von Ammoniak, die in dem Abwasser enthalten ist, adsorbieren.

6. Verfahren gemäß einem der Ansprüche 1 bis 5, wobei die festen Elemente durch Zugeben, vorzugsweise tropfenweise, einer wässrigen Natriumalginatlösung zu einer wässrigen Lösung des wenigstens einen Salzes von einem zweiwertigen Metallkation hergestellt werden.

7. Verfahren gemäß einem der Ansprüche 1 bis 6, wobei das Verfahren einen weiteren Schritt e) des Eintauchens der mit Ammoniak angereicherten festen Elemente in eine wässrige Lösung vorsieht, um adsorbiertes Ammoniak aus den festen Elementen auszuscheiden, wobei feste Elemente erhalten werden, die im Wesentlichen frei von Ammoniak sind.

8. Verfahren gemäß einem der Ansprüche 1 bis 6, wobei die Schritte b) bis d) wenigstens zweimal, mehr bevorzugt wenigstens dreimal wiederholt werden, wobei die festen Elemente von Schritt a) bereitgestellt werden, bis das Abwasser Ammoniak in einer viel geringeren Menge als der Ausgangsmenge enthält, und die festen Elemente jedes Mal mit Ammoniak angereichert werden.

9. Verfahren gemäß Anspruch 7, wobei die Schritte b) bis e) wenigstens zweimal, mehr bevorzugt wenigstens dreimal wiederholt werden, wobei die festen Elemente von Schritt a) und Schritt e) bereitgestellt werden, bis das Abwasser Ammoniak in einer viel geringeren Menge als der Ausgangsmenge enthält, und die festen Elemente jedes Mal mit Ammoniak angereichert werden.

## Revendications

1. Procédé d'élimination de l'ammoniac des eaux usées, le procédé comprenant les étapes suivantes consistant :
a) à fournir des éléments solides, où les éléments solides sont constitués d'alginate de sodium et d'au moins un sel de cation métallique divalent, le cation métallique divalent étant choisi parmi Ca²⁺, Cu²⁺, Mg²⁺, Zn²⁺, et Fe²⁺;
b) à immerger les éléments solides dans les eaux usées contenant une quantité initiale d'ammoniac ;
c) à laisser en contact interne les éléments solides avec les eaux usées, moyennant quoi les particules solides adsorbent l'ammoniac contenu dans les eaux usées ;
d) à éliminer les éléments de solides des eaux usées, obtenant ainsi des eaux usées contenant de l'ammoniac en une quantité inférieure à la quantité initiale et des éléments solides enrichis en ammoniac.

2. Procédé selon la revendication 1, dans lequel l'au moins un sel de cation métallique divalent est choisi parmi le chlorure et le nitrate de cation métallique divalent, de préférence le chlorure.

3. Procédé selon la revendication 1 ou 2, dans lequel le cation métallique divalent est choisi parmi Ca²⁺, Cu²⁺, de préférence, le cation métallique divalent est le Ca²⁺.

4. Procédé selon l'une quelconque des revendications 1 à 3, dans lequel les éléments solides sont immergés dans les eaux usées selon un rapport pondéral compris entre 0,25 et 1,50, de préférence entre 0,5 et 1.

5. Procédé selon l'une quelconque des revendications 1 à 4, dans lequel les éléments solides adsorbent l'ammoniac en une quantité d'au moins 30% en poids par rapport à la quantité initiale d'ammoniac contenue dans les eaux usées.

6. Procédé selon l'une quelconque des revendications 1 à 5, dans lequel les éléments solides sont produits en ajoutant, de préférence, goutte à goutte, une solution aqueuse d'alginate de sodium à une solution aqueuse de l'au moins un sel de cation métallique divalent.

7. Procédé selon l'une quelconque des revendications 1 à 6, dans lequel le procédé prévoit une étape supplémentaire e) d'immersion des éléments solides enrichis en ammoniac dans une solution aqueuse pour éliminer l'ammoniac adsorbé des éléments solides, obtenant ainsi des éléments solides sensiblement exempts d'ammoniac.

8. Procédé selon l'une quelconque des revendications 1 à 6, dans lequel les étapes b) à d) sont répétées au moins deux fois, plus préférablement au moins trois fois, fournissant ainsi les éléments solides de l'étape a) jusqu'à ce que les eaux usées contiennent de l'ammoniac en une quantité beaucoup plus faible que la quantité initiale et que les éléments solides soient enrichis en ammoniac à chaque fois.

9. Procédé selon la revendication 7, dans lequel les étapes b) à e) sont répétées au moins deux fois, plus préférablement au moins trois fois, fournissant ainsi les éléments solides de l'étape a) et l'étape e) jusqu'à ce que les eaux usées contiennent de l'ammoniac en une quantité beaucoup plus faible que la quantité initiale et que les éléments solides soient enrichis en ammoniac à chaque fois.
